(19) Europäisches Patentamt
European Patent Office
Office européen des brevets

(11) **EP 1 632 763 A1**

(12) **EUROPÄISCHE PATENTANMELDUNG**

(43) Veröffentlichungstag:
08.03.2006 Patentblatt 2006/10

(51) Int Cl.:
*G01K 11/24* (2006.01)   *G01K 1/04* (2006.01)

(21) Anmeldenummer: 04104258.1

(22) Anmeldetag: 03.09.2004

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(71) Anmelder: **Siemens Schweiz AG**
**8047 Zürich (CH)**

(72) Erfinder: **Lüthi, Yves**
**5630, Muri (CH)**

(74) Vertreter: **Hellebrandt, Martin**
**Postfach 22 16 34**
**80506 München (DE)**

(54) **Vorrichtung zur Erfassung von Raumklimagrössen**

(57)    Eine Vorrichtung und ein Verfahren durch Erfassung von Raumklimagrössen in einem Gebäuderaum (R) umfasst ein Basisgerät (1) und ein von diesem in einem Abstand (L) angeordnetes Hilfsgerät (2). Vom Basisgerät ausgesendete Schallwellen (A1) werden vom Hilfsgerät (2) detektiert. Über einen Signalisierungskanal (S) wird vom Hilfsgerät (2) der Zeitpunkt des Eintreffens der Schallwellen (A1) an das Basisgerät (1) übermittelt.

In einer vorteilhaften Variante der Vorrichtung weist auch das Hilfsgerät (2) einen Schallsender (25) auf. Im Basisgerät (1) sind reflektierte oder vom Hilfsgerät (2) ausgesendete Schallwellen (A2) detektierbar. Aus einer Differenz zwischen richtungsabhängigen Laufzeiten der Schallwellen (A1 und A2) ist eine Luftbewegung (W) im Gebäuderaum (R) erfassbar. Mit Hilfe der Laufzeit der Schallwellen (A1 oder A2) ist auch eine mittlere Temperatur (T) im Gebäuderaum messbar.

FIG 1

**Beschreibung**

Die Erfindung bezieht sich auf eine Vorrichtung und ein Verfahren gemäss den Oberbegriffen der Ansprüche 1 und 6.

Solche Vorrichtungen und Verfahren werden vorteilhaft in Gebäuden zur Erfassung von Raumklimagrössen eingesetzt. Die vorgeschlagene Vorrichtung ist ein Raumkomfortsensor, mit dem eine Feuchte und mit Hilfe von Schallwellen eine mittlere Temperatur und eine Luftbewegung im Raum erfassbar sind. Die erfassten Raumklimagrössen sind die Basis zur Beurteilung einer in einem Raum herrschenden Behaglichkeitssituation. Der Raumkomfortsensor ist beispielhaft in der Heizungs-, Lüftungs- und Klimatechnik zur Erfassung von Istwerten für eine Regelung des Raumklimas einsetzbar.

In EP-A-1 203 936 wird eine Vorrichtung zur Erfassung einer mittleren Raumtemperatur mit Hilfe von Schallwellen vorgeschlagen. Die von einem Sende-Empfänger generierten Schallwellen durchlaufen eine zwischen dem Sender und einem Hindernis liegende Strecke, wobei ein Teil der Schallwellen am Hindernis reflektiert und vom Sende-Empfänger wieder empfangen werden. In einem Iterationsverfahren werden die von den Schallwellen zweimal durchlaufene Strecke und die im Gebiet der Strecke herrschende mittlere Raumtemperatur ermittelt. Die bekannte Vorrichtung verfügt über einen Feuchte- und vorzugsweise auch über einen Temperatursensor, deren Messwerte zur Durchführung des Iterationsverfahrens benötigt werden. In dieser Hinsicht wird Bezug genommen auf die EP-A-1 203 936, deren Inhalt hiermit in diese Anmeldung aufgenommen wird.

Mit wachsenden Ansprüchen an die Behaglichkeit in Gebäuderäumen ergibt sich ein Bedarf an Messverfahren und Sensoreinheiten, mit denen für die Behaglichkeit relevante Messwerte erfassbar sind.

Zur Beschreibung oder Ermittlung des thermischen Komforts eines Raumes, beziehungsweise der thermischen Behaglichkeit, die ein Benutzer des Raumes wahrscheinlich empfinden würde, werden in der Literatur verschiedene Verfahren vorgeschlagen, in denen beispielsweise Lufttemperatur, Luftfeuchte, Luftgeschwindigkeit und Turbulenzgrad berücksichtigt werden. Stellvertretend für einen Behaglichkeitsmassstab sei hier ein Wärmekomfort-Messgerät nach Fanger/Madsen erwähnt (Recknagel, Sprenger, Schramek: Taschenbuch für Heizung und Klimatechnik, München 1999, Seite 72).

In DE-A-198 22 102 wird ein Komfortsensor vorgeschlagen, der einen Temperaturfühler aufweist, der von einem gut wärmeleitenden Hohlkörper umschlossen ist.

In DE-A-100 50 235 wird ein klimatechnischer Sensor vorgeschlagen, der unter den Taupunkt gekühlt wird und an dessen Oberfläche sich Feuchtigkeit aus der Umgebungsluft ausscheidet. Der Sensor wird in Zeitintervallen auf die menschliche Körpertemperatur aufgeheizt.

DE-A-198 34 250 und DE-A-197 02 622 offenbaren klimatechnische Thermoanemometer zur Bestimmung einer Luftströmung in einem Raum.

In DE-A-198 55 056 wird ein Lüftungssystem mit mehreren Sensoren zur Erfassung von Temperatur, Feuchtigkeit, $CO_2$, Luftgüte und Luftströmung offenbart.

Bekannte Vorrichtungen zur Erfassung des Raumklimas sind in der Regel mit erheblichem Aufwand bezüglich Fertigung oder Abgleich verbunden, diejenigen Grössen, die das Raumklima im Wesentlichen bestimmen, sind durch die Vorrichtung nicht alle erfassbar, oder die Vorrichtung ist nicht auf die zur Bestimmung des Raumklimas notwendigen Grössen beschränkt. Bekannte Vorrichtungen erfassen eine Raumklimagrösse ausserdem sehr lokal in einem Punkt eines Gebäuderaums, an dem der betreffende Sensor positioniert ist.

Der Erfindung liegt die Aufgabe zu Grunde, eine kostengünstige Komfort-Sensoreinheit zur Erfassung derjenigen Messgrössen anzugeben, die im Wesentlichen die Behaglichkeit eines Gebäuderaums bestimmen.

Die genannte Aufgabe wird erfindungsgemäss durch die Merkmale der Ansprüche 1 und 6 gelöst. Vorteilhafte Ausgestaltungen ergeben sich aus den abhängigen Ansprüchen.

Es hat sich gezeigt, dass eine von Benutzern eines Gebäuderaums empfundene Behaglichkeit insbesondere von Lufttemperatur, Luftfeuchte und Luftbewegung abhängt.

Erfindungsgemäss wird mit Hilfe von Schallwellen eine Luftbewegung im Gebäuderaum ermittelt, wobei ein akustischer Pfad benutzt wird, mit dessen Hilfe und mit Berücksichtigung einer ermittelten Luftfeuchte auch eine mittlere Lufttemperatur des Gebäuderaums ermittelt wird. Bei einer günstigen Ausrichtung des akustischen Pfads im Gebäuderaum, sind aussagekräftige Mittelwerte für Lufttemperatur und Luftzug erfassbar.

Grundlagen über die Ausbreitung von Schallwellen sind allgemein bekannt, beispielsweise auch aus V. Sutilov, Physik des Ultraschalls, Springerverlag, 1984. Für Luft bei einer Temperatur von 0 °C beträgt die Schallgeschwindigkeit $c_0$ 332 ms$^{-1}$. Die Schallgeschwindigkeit in Luft ist von der Feuchte und der Temperatur abhängig.

Die Ausdrücke Schall oder Schallwelle ohne weitere Angaben bedeuten in diesem Dokument allgemein Schallwellen in den Frequenzbereichen Hörschall (16 Hz ≤ f ≤ 16 kHz) oder Ultraschall (f > 16 kHz).

Es versteht sich von selbst, dass die Frequenz der eingesetzten Schallwellen im Bereich des Ultraschalls gewählt wird, wenn der Gebäuderaum ein Wohn- oder Arbeitsraum ist.

Die Frequenz der praktisch einsetzbaren Schallwellen ist nach unten bei etwa 40 kHz begrenzt, da bei tieferen Frequenzen die ersten Sub-Harmonischen f/2 in den Hörbereich fallen. Nach oben ergibt sich die Grenze bei etwa 80 kHz, da sich bei höheren Frequenzen die Absorption durch die Luft zu stark auswirkt. Bei einer Schallfrequenz im Bereich von 40 kHz bis 60 kHz ist eine mit den Schallwellen überwindbare Strecke auch in einem relativ grossen Gebäuderaum genügend gross.

Nachfolgend werden Ausführungsbeispiele der Erfindung anhand der Zeichnung näher erläutert. Es zeigen:

Fig. 1 ein Komfortsensor zum Erfassen von Raumklimagrössen,
Fig. 2 ein Diagramm zur Funktionsweise des Komfortsensors, und
Fig. 3 ein Diagramm zu einer Variante des Komfortsensors.
Fig. 4a ein Komfortsensor in einem Raum,
Fig. 4b der Komfortsensor in einem weiteren Raum,
Fig. 5 eine Anlage zur Regelung und/oder Steuerung von Raumklimagrössen,

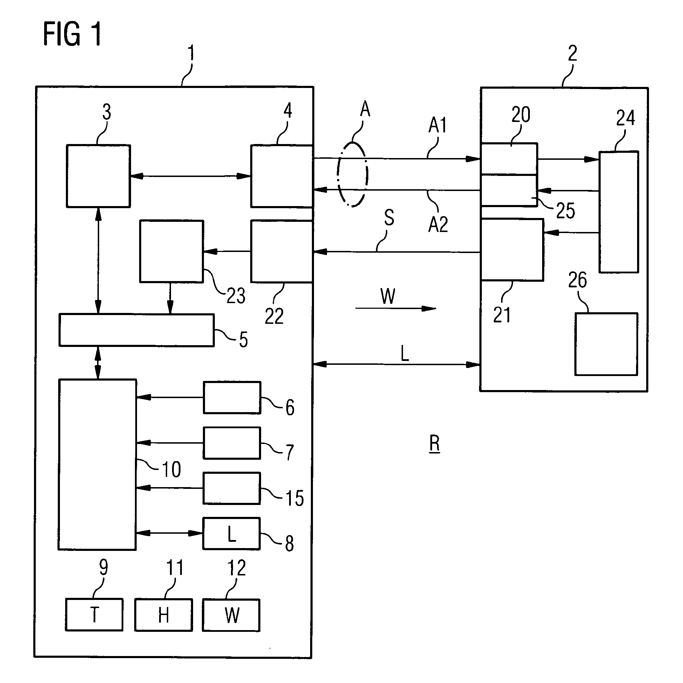

In der Fig. 1 bezeichnet 1 ein Basisgerät und 2 ein Hilfsgerät eines sogenannten Komfortsensors, also einer Vorrichtung zur Erfassung von Raumklimagrössen. Das Basisgerät 1 und das Hilfsgerät 2 sind in einem gewissen Abstand L voneinander entfernt in einem Gebäuderaum R angeordnet.

Das Basisgerät 1 weist einen über eine Treibereinheit 3 ansteuerbaren Schallwandler 4 und eine Zeitgebereinheit 5 auf. Ein Feuchtefühler 7 und bei Bedarf auch ein Temperaturfühler 6 sind mit Vorteil im Basisgerät 1 angeordnet. Das Basisgerät 1 umfasst auch einen ersten Speicherplatz 8 für den Abstand L und einen zweiten Speicherplatz 9 für eine durch die Vorrichtung für den Gebäuderaum R ermittelte mittlere Temperatur T. Mit Vorteil weist das Basisgerät 1 wenigstens einen Prozessor 10 auf.

Der Temperaturfühler 6 ist mit Vorteil eine kostengünstige Ausführung, beispielsweise ein Nickelfühler, der in einem Iterationsverfahren zur Berechnung einer mittleren Temperatur T vorteilhafterweise lediglich zur Generierung eines Start- oder Schätzwerts eingesetzt wird.

Ein dritter Speicherplatz 11 für eine mit Hilfe des Feuchtefühlers 7 erfasste Luftfeuchte H des Gebäuderaumes R und ein vierter Speicherplatz 12 für eine ermittelte Luftbewegung W im Gebäuderaum R sind vorteilhafterweise im Basisgerät 1 angeordnet.

Bei Bedarf weist der Komfortsensor auch einen Gassensor 15 zur Erfassung eines bestimmten Bestandteils aus der Luft des Gebäuderaums R auf. Der Gassensor 15 ist beispielhaft ein $CO_2$-Fühler.

Das Hilfsgerät 2 weist einen Schallempfänger 20 auf. Zum Aufbau eines Signalisierungskanals S zwischen dem Hilfsgerät 2 und dem Basisgerät 1 sind im Hilfsgerät 2 ein Sender 21 und im Basisgerät 1 ein Empfänger 22 angeordnet. Im Basisgerät 1 ist der Empfänger 22 über einen Treiber 23 mit der Zeitgebereinheit 5 verbunden.

Ein Zeitglied 24 ist im Hilfsgerät 2 angeordnet und eingangsseitig mit dem Schallempfänger 20 verbunden. Das im Hilfsgerät 2 angeordnete Zeitglied 24 weist einen mit dem Sender 21 verbundenen Ausgang auf.

In einer vorteilhaften Variante des Hilfsgeräts 2 ist ein Schallsender 25 vorhanden, der über einen weiteren Ausgang des im Hilfsgerät 2 angeordneten Zeitglieds 24 ansteuerbar ist. Der Schallempfänger 20 und der Schallsender 25 sind beispielhaft in einem einzigen Bauelement implementiert.

Mit Vorteil weist das Hilfsgerät 2 eine Baugruppe 26 zur netzfreien Energieversorgung des Hilfsgeräts 2 auf. Die Baugruppe 26 ist beispielsweise eine Batterie oder ein anderer bekannter Energieumwandler.

Vom Schallwandler 4 generierte Schallwellen A1 durchlaufen den Gebäuderaum R über den Abstand L und treffen auf den im Hilfsgerät 2 angeordneten Schallempfänger 20.

Beim Schallwandler 4 auftreffende Schallwellen A2 durchlaufen den Gebäuderaum R in entgegengesetzter Richtung der von der Basiseineinheit 1 ausgehenden Schallwellen A1. Die Schallwellen A2 sind vom Schallsender 25 generierte Schallwellen oder von einem Hindernis reflektierte, vom Schallwandler 4 generierte Schallwellen A1. Das die Schallwellen A1 wenigstens teilweise reflektierende Hindernis ist in einem idealen Fall das Hilfsgerät 2 oder auch ein Objekt - beispielsweise eine Wand oder Säule - an dem das Hilfsgerät 2 angeordnet ist. Im Schallwandler 4 werden die auftreffenden Schallwellen A2 in elektrische Signale umgewandelt.

Die Treibereinheit 3 dient der Bedienung des Schallwandlers 4 und liefert einerseits elektrische Signale zum Ansteuern des Schallwandlers 4. Andrerseits werden die vom Schallwandler 4 generierten elektrischen Signale durch die Treibereinheit 3 den Anforderungen der Zeitgebereinheit 5 angepasst an diese weitergeleitet.

Durch die Zeitgebereinheit 5 werden die Ansteuerung des Schallwandlers 4 und die Auswertung der vom Schallwandler 4 generierten und die vom Treiber 23 übermittelten elektrischen Signale zeitlich derart aufeinander abgestimmt und veranlasst, dass eine Laufzeit ermittelt werden kann, welche die Schallwellen zum Durchlaufen des Abstands L benötigen.

Bei Bedarf umfasst die Zeitgebereinheit 5 einen zusätzlichen Prozessor oder Mikrocomputer, oder die Zeitgebereinheit 5 und der Prozessor 10 können als hochintegrierter Einzelbaustein verwirklicht sein.

Ein von den Schallwellen A1 und A2 gebildeter akustischer Pfad A wird vorteilhafterweise im Raum R so ausgerichtet, dass die Schallwellen sich möglichst hauptsächlich mit einem im Raum R zu erwartenden Luftzug oder gegen den Luftzug ausbreiten.

In einem optimalen Fall ist die Luftbewegung W identisch mit der mit Hilfe des akustischen Pfads A erfassten Komponente des Luftzugs.

Für die nähere Beschreibung der Funktionsweise der in der Fig. 1 dargestellten Vorrichtung werden folgende, teilweise oben schon eingeführte Symbole benutzt:

L    Abstand zwischen dem Basisgerät 1 und dem Hilfsgerät 2

W    auf dem akustischen Pfad erfasste Komponente der Luftbewegung

$c_0$    Schallgeschwindigkeit in Luft

$t_f$    Laufzeit der Schallwellen A1 vom Basisgerät 1 hin zum Hilfsgerät 2, und

$t_b$    Laufzeit der Schallwellen A2 vom Hilfsgerät 2 zurück zum Basisgerät 1.

Mit obigen Symbolen ergeben sich folgende Gleichungen für einen Hinweg in Richtung der Luftbewegung W und einen Rückweg entgegen der Luftbewegung W:

$$c_o + W = ( L/t_f ) \qquad [ \text{Gleichung 1} ]$$

$$c_o - W = ( L/t_b ) \qquad [ \text{Gleichung 2} ]$$

Durch Subtraktion der Gleichung 2 von Gleichung 1:

$$W = ( L / 2 ) ( 1/t_f - 1/t_b ) \qquad [ \text{Gleichung 3} ]$$

Mit Hilfe der beiden gemessenen Laufzeiten $t_f$ und $t_b$ der in entgegengesetzte Richtungen den Abstand L durchlaufenden Schallwellen A1 und A2 ist also die Luftbewegung W unabhängig von der Schallgeschwindigkeit mit Gleichung 3 berechenbar.

Ein vorteilhaftes Verfahren zur Erfassung einer Luftbewegung W mittels Schallwellen umfasst folgende vier Verfahrensabschnitte:

Einen ersten Verfahrensabschnitt, in dem der Weg L zwischen dem Basisgerät 1 und dem Hilfsgerät 2 ermittelt und im ersten Speicherplatz 8 abgelegt wird. Einen zweiten Verfahrensabschnitt, in dem die Laufzeit $t_f$, welche die Schallwellen A1 auf dem Weg L vom Basisgerät 1 zum Hilfsgerät 2 benötigen, ermittelt wird. Einen dritten Verfahrensabschnitt, in dem die Laufzeit $t_b$, welche die Schallwellen A2 auf dem Weg L vom Hilfsgerät 2 zum Basisgerät 1 benötigen. Einen vierten Verfahrensabschnitt, in dem die Luftbewegung W nach der Gleichung 3 berechnet und im vierten Speicherplatz 12 abgespeichert wird.

Mit Vorteil wird der erste Verfahrensabschnitt bei jedem Neustart der Vorrichtung durchgeführt und bei Bedarf wiederholt. Der erste Verfahrensabschnitt wird also beispielsweise dann wiederholt, wenn ein unerwartet grosser Sprung bei den mit Hilfe der Schallwellen ermittelten Werte der Luftbewegung oder der Raumtemperatur festgestellt wird. Eine Sequenz mit dem zweiten, dem dritten und dem vierten Verfahrensabschnitt wird vorteilhafterweise derart periodisch wiederholt, damit verfügbare Werte für die Luftbewegung W genügend aktuell sind.

Im ersten Verfahrensabschnitt wird mit Vorteil der Abstand L mit Hilfe der Schallwellen des akustischen Pfads A bestimmt, wobei ein in der EP-A-1 203 936 vorgeschlagenes Iterationsverfahren angewandt wird. Durch das bekannte Iterationsverfahren zur Ermittlung des Abstands L wird beispielsweise ein manuelles Ausmessen des Abstands L und ein Einlesen des gemessenen Abstands L in das Basisgerät 1 vermeidbar.

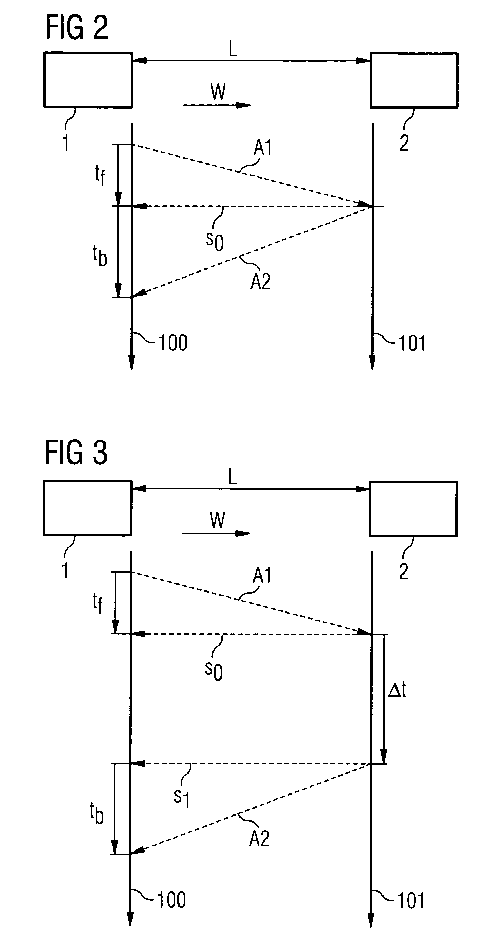

Zur Beschreibung des zeitlichen Ablaufs des zweiten und dritten Verfahrensabschnittes sind in der Fig. 2 auf einer ersten Zeitachse 100 Ereignisse im Basisgerät 1 eingetragen, während Ereignisse im Hilfsgerät 2 auf einer zweiten Zeitachse 101 dargestellt sind.

Im zweiten Verfahrensabschnitt sendet der Schallwandler 4 die Schallwellen A1 aus, welche nach der Laufzeit $t_f$ beim Schallempfänger 20 (Fig. 1) des Hilfsgeräts 2 eintreffen. Das Ereignis des Eintreffens der Schallwellen A1 beim Schallempfänger 20 wird im Hilfsgerät 2 durch das Zeitglied 24 detektiert, was unmittelbar ein über den Signalisierungskanal S geleitetes Stopp-Signal $S_0$ auslöst. Das im Basisgerät 1 an die Zeitgebereinheit 5 weitergeleitete Stopp-Signal $S_0$ ermöglicht die Erfassung der Laufzeit $t_f$ durch die Zeitgebereinheit 5.

Die Übertragungsgeschwindigkeit des Stopp-Signals $S_0$ über den Signalisierungskanal S muss also mindestens so gross sein, dass eine Laufzeit des Stopp-Signals $S_0$ gegenüber der Laufzeit $t_f$ der Schallwellen A1 vernachlässigbar klein ist. Mit Vorteil arbeitet der Signalisierungskanal S drahtlos, damit Drahtverbindungen zwischen dem Basisgerät 1 und dem Hilfsgerät 2 entfallen. Die beiden genannten Forderungen werden beispielhaft erfüllt, wenn der Signalisierungskanal S durch eine optoelektronische Verbindung implementiert wird. Beispielhaft verfügt der Sender 21 über eine Leuchtdiode und der Empfänger 22 weist einen passenden Fototransistor auf.

Der dritte Verfahrensabschnitt ist grundsätzlich in drei unterschiedlichen Varianten implementierbar. In einer ersten Variante ist im Hilfsgerät 2 kein Schallsender 25 erforderlich, da die Laufzeit $t_b$ mittels von einem Hindernis reflektierter ursprünglich im Basisgerät 1 generierter Schallwellen ermittelt wird. Dabei wird angenommen, dass die beim Basisgerät 1 detektierten Schallwellen A2 in einer Ebene des Hilfsgeräts 2, also im Abstand L reflektiert und zum Basisgerät 1 zurückgeworfen werden. Das im zweiten Verfahrensabschnitt über den Signalisierungskanal S an das Basisgerät 1 übermittelte Stopp-Signal $S_0$ (Fig. 2) ist zugleich ein Start-Signal für die am Hilfsgerät 2 durch Reflexion zum Basisgerät 1 hin ausgesendeten Schallwellen A2, welche nach ihrer von der Zeitgebereinheit 5 erfassbaren Laufzeit $t_b$ am Schallwandler 4 des Basisgeräts 1 eintreffen.

In einer zweiten Variante des dritten Verfahrensabschnitts weist das Hilfsgerät 2 den Schallsender 25 auf, von dem zeitgleich mit dem Stopp- und Startsignal $S_0$ die Schallwellen A2 zum Basisgerät 1 hin gesendet werden, welche nach ihrer von der Zeitgebereinheit 5 erfassbaren Laufzeit $t_b$ am Schallwandler 4 des Basisgeräts 1 eintreffen. Die Schallwellen A2 werden vorteilhafterweise durch das Zeitglied 24 zeitgleich mit dem Stopp- und Start-Signal $S_0$ ausgelöst.

Auch in einer dritten Variante des dritten Verfahrensabschnitts benötigt das Hilfsgerät 2 den Schallsender 25. Nach dem das im zweiten Verfahrensabschnitt über den Signalisierungskanal S an das Basisgerät 1 übermittelte Stopp-Signal $S_0$ (Fig. 3) gesendet worden ist, werden ein eigentliches Start-Signal $S_1$ und zeitgleich die Schallwellen A2 durch das Zeitglied 24 erst nach einer gewissen Verzögerungszeit $\Delta t$ ausgelöst. Die Schallwellen A2 treffen nach ihrer von der Zeitgebereinheit 5 erfassbaren Laufzeit $t_b$ am Schallwandler 4 des Basisgeräts 1 ein. Die Verzögerungszeit $\Delta t$ ist vorteilhafterweise mindestens so gross gewählt, dass erwartete Reflexionen der vom Schallwandler 4 ausgesendeten Schallwellen A1 mit Sicherheit abgeklungen sind.

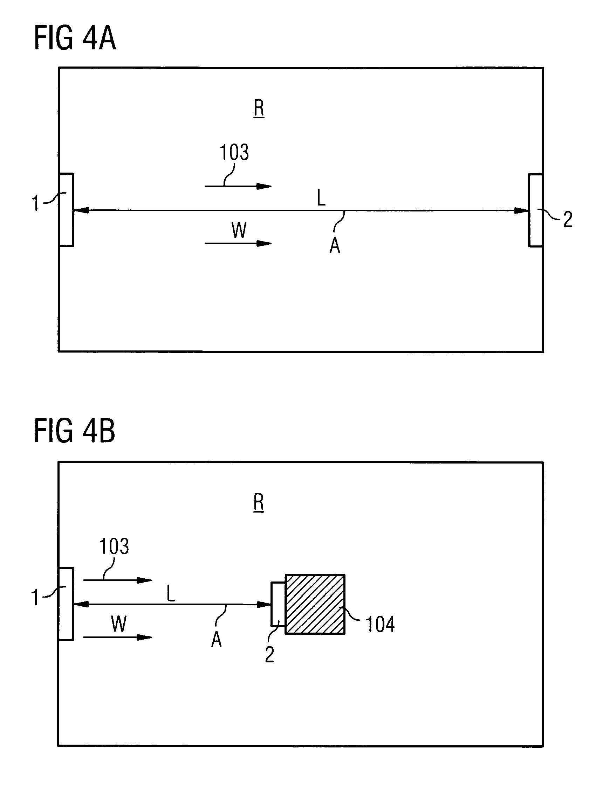

Für den in der Fig. 4a dargestellten Gebäuderaum R zeigt ein Pfeil 103 die hauptsächliche Richtung einer zu erwartenden Zugluft an. Mit Vorteil wird der akustische Pfad A in der zu erwartenden Zugluft angeordnet, indem das Basisgerät 1 und das Hilfsgerät 2 beispielsweise an gegenüberliegenden Wänden des Gebäuderaums R entsprechend angeordnet werden.

In einer in der Fig. 4b dargestellten vorteilhaften Anordnung weist der Gebäuderaum R einen Körper, beispielsweise eine Säule 104 auf, an der das Hilfsgerät 2 derart angeordnet ist, dass der akustische Pfad A in der zu erwartenden Zugluft liegt.

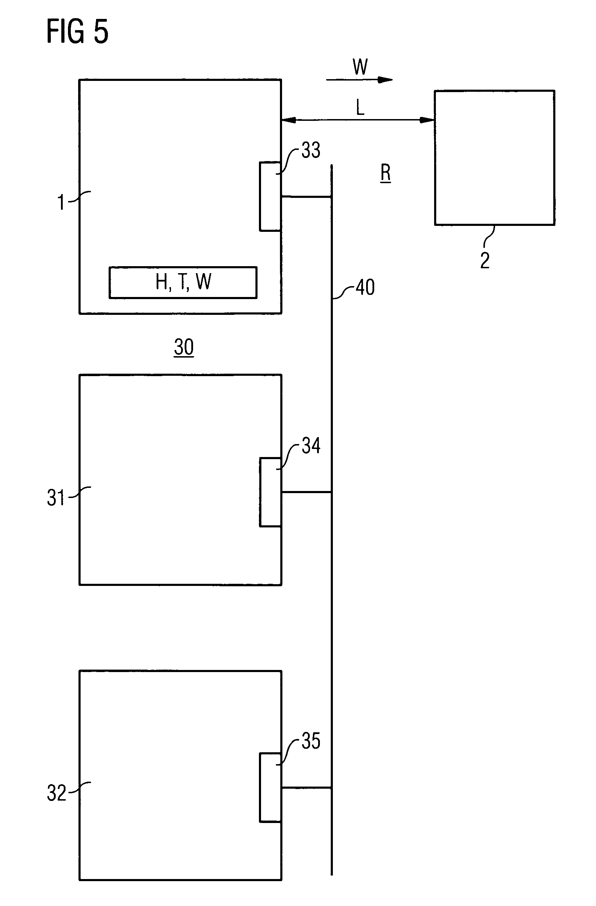

In der Fig. 5 bedeutet 30 eine Anlage zur Regelung und/oder Steuerung von Raumklimagrössen des Raumes 2. Die Anlage 30 weist wenigstens ein Regelgerät 31, ein Stellglied 32 und einen das Basisgerät 1 und das Hilfsgerät 2 umfassenden Komfortsensor. Im Komfortsensor sind wenigstens die relative Feuchte H, die Temperatur T, und der Luftbewegung W des Gebäuderaumes R abgespeichert. Das Regelgerät 31, das Stellglied 32 und die Vorrichtung 1 weisen je eine Schnittstelleneinheit 33 bzw. 34 bzw. 35 auf, welche mit einem Kommunikationsmedium 40 verbunden ist. Über das Kommunikationsmedium 40 sind Prozessgrössen - beispielsweise Raumklimawerte oder Stellsignale - zwischen den Teilnehmerstationen, nämlich dem Komfortsensor, dem Regelgerät 31 und dem Stellgerät 32 austauschbar. Das Kommunikationsmedium 40 ist eine verdrahtete - oder eine drahtlose Verbindungseinrichtung. In der Fig. 5 ist typischerweise ein Teil eines Gebäudeleitsystems dargestellt.

Es versteht sich von selbst, dass das Regelgerät 31 und das Basisgerät 1 des Komfortsensors bei Bedarf auch in einer einzigen Baugruppe verwirklichbar sind.

**Patentansprüche**

1. Vorrichtung zur Erfassung von Raumklimagrössen in einem Gebäuderaum (R), mit einem Schallwandler (4) zum Generieren und Empfangen von
Schallwellen (A1, A2),
mit einer Prozessoreinheit (10) zur zeitlichen Steuerung und Verarbeitung von Signalen zur Erfassung der Laufzeit der Schallwellen (A1, A2) für eine gewisse Distanz (L),
mit Mitteln zur Erfassung der Raumtemperatur (T), und
mit einem Feuchtesensor (7),
**gekennzeichnet durch**

- ein im Gebäuderaum (R) in einer gewissen Entfernung (L) vom Schallwandler (4) angeordnetes Hilfsgerät (2) mit einem Schallwellenempfänger (20) und einem Sender (21) für ein Triggersignal ($S_0$; $S_1$),

- einen zwischen dem Sender (21) und einem Empfänger 22) aufbaubaren Signalisierungskanal (S) zur Übertragung des Triggersignals ($S_0$; $S_1$) vom Hilfsgerät (2) zur Prozessoreinheit (10),

wobei der Schallempfänger (20) derart mit dem Sender (21) des Triggersignals ($S_0$; $S_1$) verbunden ist, dass beim Empfangen eines Schallsignals (A1) das Triggersignal ($S_0$) über den Signalisierungskanal (S) zur Prozessoreinheit (10) übertragbar ist.

**2.** Vorrichtung nach Anspruch 1, **dadurch gekennzeichnet,**
**dass** das Hilfsgerät (2) einen Schallwellensender (25) zum Generieren von Schallwellen (A2) aufweist.

**3.** Vorrichtung nach Anspruch 2, **dadurch gekennzeichnet, dass** der Schallwellensender (25) derart mit dem Sender (21) des Triggersignals ($S_0$; $S_1$) verbunden ist, dass beim Senden eines Schallsignals (A2) das Triggersignal ($S_0$; $S_1$) über den Signalisierungskanal (S) zur Prozessoreinheit (10) übertragbar ist.

**4.** Vorrichtung nach einem vorangehenden Anspruch, **gekennzeichnet durch** ein zusätzliches Sensorelement (15) zur Erfassung eines Gases im Gebäuderaum (R).

**5.** Vorrichtung nach Anspruch 4, **dadurch gekennzeichnet, dass** der Kohlendioxydgehalt durch das zusätzliche Sensorelement (15) erfassbar ist.

**6.** Verfahren zur Erfassung von Raumklimagrössen, **gekennzeichnet durch** die Verfahrensschritte:

- Aussenden von Schallwellen (A1) über einen gewissen Weg (L) von einem Basisgerät (1) zu einem Hilfsgerät (2),
- Detektieren der Schallwellen (A1) im Hilfsgerät (2),
- Senden eines Signals (S0) vom Hilfsgerät (2) zum Basisgerät (1) über einen Signalisierungskanal (S), beim Detektieren der Schallwellen (A1),
- Empfangen des Signals (S0) im Basisgerät (1) und Messen einer Laufzeit ($t_f$) der Schallwellen (A1) vom Basisgerät (1) zum Hilfsgerät (2), und
- Detektieren von Schallwellen (A2) im Basisgerät (1).

**7.** Verfahren nach Anspruch 6, **gekennzeichnet durch** den Verfahrensschritt:

- Aussenden von Schallwellen (A2) und einem Start-Signal (S1) vom Hilfsgerät (2) zum Basisgerät (1).

**8.** Verfahren nach einem der Ansprüche 6 oder 7, **gekennzeichnet durch** den Verfahrensschritt:

- Messen einer Laufzeit ($t_b$) der Schallwellen (A2) vom Basisgerät (1) zum Hilfsgerät (2).

**9.** Verfahren nach Anspruch 8, **gekennzeichnet durch** den Verfahrensschritt:

- Berechnen einer Luftbewegung (W) im Gebäuderaum mit Hilfe der beiden gemessenen Laufzeiten ($t_f$, $t_b$) der Schallwellen (A1, A2) und dem Weg (L).

**10.** Verfahren nach einem der vorangehenden Ansprüche, **gekennzeichnet durch** den Verfahrensschritt:

- Berechnen einer mittleren Lufttemperatur (T) mit Hilfe der zwischen dem Basisgerät (1) und dem Hilfsgerät (2) ausgetauschten Schallwellen (A1, A2).

EP 1 632 763 A1

FIG 1

R

7

FIG 2

FIG 3

## FIG 4A

R

103

1

L

W

A

2

## FIG 4B

R

103

1

L

W

A

2

104

## FIG 5

**Europäisches Patentamt**

**EUROPÄISCHER RECHERCHENBERICHT**

Nummer der Anmeldung

EP 04 10 4258

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 624 188 A (WEST DAVID A) 29. April 1997 (1997-04-29) | 6-10 | G01K11/24 G01K1/04 |
| A | * Spalte 2, Zeile 14 - Spalte 6, Zeile 27; Abbildungen 1,2 * ----- | 1-5 | |
| A,D | EP 1 203 936 A (SIEMENS BUILDING TECH AG) 8. Mai 2002 (2002-05-08) * das ganze Dokument * ----- | 1-10 | |
| A | US 6 386 755 B1 (DRAXTON DEAN E ET AL) 14. Mai 2002 (2002-05-14) * Zusammenfassung * ----- | 1-10 | |

RECHERCHIERTE SACHGEBIETE (Int.Cl.7)

G01K

Der vorliegende Recherchenbericht wurde für alle Patentansprüche erstellt

| Recherchenort | Abschlußdatum der Recherche | Prüfer |
|---|---|---|
| München | 23. November 2004 | Thomte, M |

**ANHANG ZUM EUROPÄISCHEN RECHERCHENBERICHT
ÜBER DIE EUROPÄISCHE PATENTANMELDUNG NR.**

EP 04 10 4258

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 5624188 | A | 29-04-1997 | KEINE | | |
| EP 1203936 | A | 08-05-2002 | EP | 1203936 A1 | 08-05-2002 |
| | | | JP | 2002195892 A | 10-07-2002 |
| | | | US | 2002101905 A1 | 01-08-2002 |
| US 6386755 | B1 | 14-05-2002 | US | 2002131472 A1 | 19-09-2002 |
| | | | US | 2004052295 A1 | 18-03-2004 |
| | | | AU | 8381998 A | 25-01-1999 |
| | | | EP | 0995088 A2 | 26-04-2000 |
| | | | WO | 9901727 A2 | 14-01-1999 |

EPO FORM P0461

Für nähere Einzelheiten zu diesem Anhang : siehe Amtsblatt des Europäischen Patentamts, Nr.12/82